# EUROPÄISCHE PATENTANMELDUNG

(11) **EP 1 376 077 A2**
(43) Veröffentlichungstag der Anmeldung: **02.01.2004**
(21) Anmeldenummer: 03013788.9
(22) Anmeldetag: 18.06.2003
(51) Int. Cl.: G01F 23/38

(54) **Berührungsloser Füllstandgeber**

(30) Priorität: 28.06.2002 DE 10229280
(71) Anmelder: TI Automotive (Neuss) GmbH, 41456 Neuss (DE)
(72) Erfinder: Kleinen, Alfred, 41849 Wassenberg (DE); Bürger, Frank, 52355 Düren (DE); Ludwig, Norbert, 41379 Brüggen (DE)
(74) Vertreter: von Kirschbaum, Alexander, Dipl.-Ing.

(57) **Zusammenfassung**

Die Erfindung betrifft einen berührungslosen Füllstandgeber für einen Flüssigkeitsbehälter, vorzugsweise einen Kraftstoffvorratsbehälter. Sie besteht aus einem Schwimmer, der an einem Ende eines Hebelarms angeordnet ist, dessen zweites Ende in einem Gehäuse drehbar gelagert ist. Im Bereich dieses drehbar gelagerten Endes des Hebels befindet sich ein Segment eines Ringmagneten, welcher bei Änderung des Füllstands an einem berührungslosen Sensor vorbeigeführt wird, dessen Ausgangssignal als Maß für die im Kraftstoffbehälter vorhandene Flüssigkeitsmenge dient. Der her vorgeschlagene modulare Aufbau beinhaltet lediglich die Bauteile Gehäuse mit Sensor, Hebelarm mit Magneten und Schwimmer. Dadurch entsteht eine sehr kompakte modulare Bauweise, die einfach und kostengünstig herzustellen ist.

## Beschreibung

Die Erfindung betrifft einen berührungslosen Füllstandgeber für Flüssigkeitsbehälter, insbesondere Kraftstoffvorratsbehälter mit einem Gehäuse, in dem ein berührungsloser Sensor angeordnet ist, der mit einer Auswerteeinheit verbunden ist und der in Wirkverbindung mit einem Magneten steht, der sich bei Bewegung eines an einem ersten Ende eines Hebels angeordneten Schwimmers relativ zum Sensor bewegt, so daß die Änderung des auf den Sensor wirkenden magnetischen Feldes in ein elektrisches Signal umgeformt wird, so daß von der Auswerteeinheit ein dem Füllstand der Flüssigkeit im Behälter entsprechendes Ausgangssignal gewinnbar ist.

Derartige berührungslose Füllstandgeber sind bekannt und werden beispielsweise in der DE 199 44 330 beschrieben. Der hierin dargestellte Füllstandsensor ist in eine Öffnung an der Oberseite eines Kraftstoffbehälters eingesetzt. Er besteht aus einem Hebel, an dessen erstem Ende ein Schwimmer angeordnet ist und dessen zweites Ende in einem Trägerteil gelagert ist, wobei dieses zweite Ende des weiteren fest mit einer Kurvenscheibe verbunden ist. Bei Bewegung des Schwimmers hebt bzw. senkt diese Kurvenscheibe direkt oder indirekt einen Magneten. Dieser Magnet steht in Wirkverbindung zu einem berührungslosen Sensor, so daß sich bei Verschieben des Magneten das auf den Magnetsensor einwirkende Magnetfeld ändert. Aus dem auf den Magnetsensor einwirkenden Magnetfeld entsteht ein elektrisches Ausgangssignal am Sensor dessen Größe ein Maß für den Füllstand der Flüssigkeit im Behälter darstellt.

Nachteil dieser Erfindung ist der relativ komplizierte und somit kostenintensive Aufbau der insbesondere einen hohen Montageaufwand verursacht. Des weiteren entstehen durch den komplexen mechanischen Aufbau mögliche Fehlerquellen.

Daher liegt der Erfindung die Aufgabe zugrunde, einen berührungslosen Füllstandgeber zu schaffen, der einfach herzustellen und zu montieren ist, somit die Kosten minimiert und gleichzeitig mögliche Fehlerquellen vermeidet und somit die Funktionssicherheit gewährleistet.

Diese Aufgabe wird dadurch gelöst, daß der Magnet zumindest als Segment eines Ringmagneten ausgeführt ist, der an einem zweiten Ende des Hebels angeordnet und in diesen integriert ist. Hierdurch entsteht eine Reduzierung der Anzahl der Bauteile und somit ein erheblich geringerer Montageaufwand.

In einer weiterführenden Ausführungsform ist zumindest das Segment des Ringmagneten in einen kraftstoffbeständigen Kunststoff des Hebels eingespritzt, wodurch die Funktionssicherheit des Magneten im korrosiven Kraftstoff sichergestellt wird.

In einer bevorzugten Weiterbildung ist dieser Hebelarm drehbar mit dem Gehäuse verbunden und an diesem gelagert, vorzugsweise verclipst oder verrastet. Hierdurch findet auf sehr einfache Weise die Montage und Lagerung des Hebelarms am Gehäuse statt und ein Vorbeiführen des Ringmagnetsegmentes am Sensor wird auf einfache Art und Weise sichergestellt, so daß eine Übertragung der Schwimmerstellung vom Magneten auf den Sensor ohne zwischengeschaltete Bauteile erfolgt, wodurch die Funktionssicherheit zusätzlich erhöht wird.

Vorzugsweise wird als Sensor ein frei programmierbarer Sensor verwendet, wodurch die Anpassung an jede Form eines Kraftstoffbehälters möglich ist.

In einer weiterführenden Ausführungsform ist der Sensor mit Entstörbausteinen auf einer Platine angeordnet, die mit einem kraftstoffbeständigen Kunststoff umspritzt und in das Gehäuse integriert ist. Auch durch diese Maßnahme wird die Funktionssicherheit erhöht, da ein Kontakt der Platine mit dem korrosiven Kraftstoff verhindert wird. Durch die Integration des dadurch entstehenden Bauteils in das Gehäuse wird noch einmal die Bauteilanzahl und die resultierenden Kosten gesenkt.

Optimalerweise ist die umspritzte Platine über eine Schnappverbindung an das Gehäuse montierbar und der Sensor dabei durch einen Durchbruch im Gehäuse führbar, wodurch die Gesamtteileanzahl und somit der Montageaufwand noch einmal reduziert werden und eine störungsfreie Wirkverbindung von Magnet und Sensor sichergestellt werden, da keine feldbeeinflussenden Bauteile zwischen Sensor und Magnet vorhanden sind.

Ein solcher Füllstandgeber besteht somit im wesentlichen aus drei Bauteilen, nämlich dem Schwimmer, dem Hebelarm mit eingespritztem Magneten und dem Gehäuse mit integriertem Sensor. Durch diese sehr geringe Teileanzahl wird der Montageaufwand erheblich gesenkt und somit Herstellkosten eingespart. Des weiteren wird durch die oben beschriebenen Ausführungsformen die Funktionssicherheit dieses berührungslosen Füllstandgebers sichergestellt und im Vergleich zu anderen erhöht.

Eine erfindungsgemäße Ausführungsform ist in den Zeichnungen dargestellt und wird nachfolgend beschrieben;

Figur 1 zeigt in perspektivischer Ansicht einen erfindungsgemäßen Füllstandgeber in gesprengter Darstellung.

Figur 2 zeigt in perspektivischer Ansicht den erfindungsgemäßen Füllstandgeber in zusammengebautem Zustand.

Figur 3 zeigt in geänderter perspektivischer Ansicht einen Ausschnitt des erfindungsgemäßen Füllstandgebers in gesprengter Darstellung.

Figur 4 zeigt in geschnittener Darstellung eine Seitenansicht der Platine mit umspritztem Sensor.

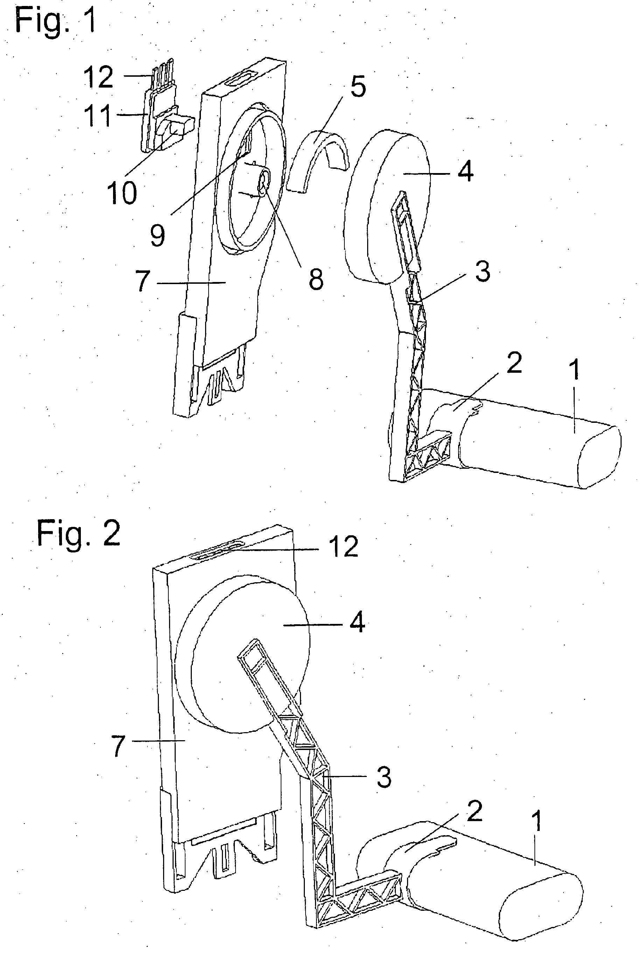

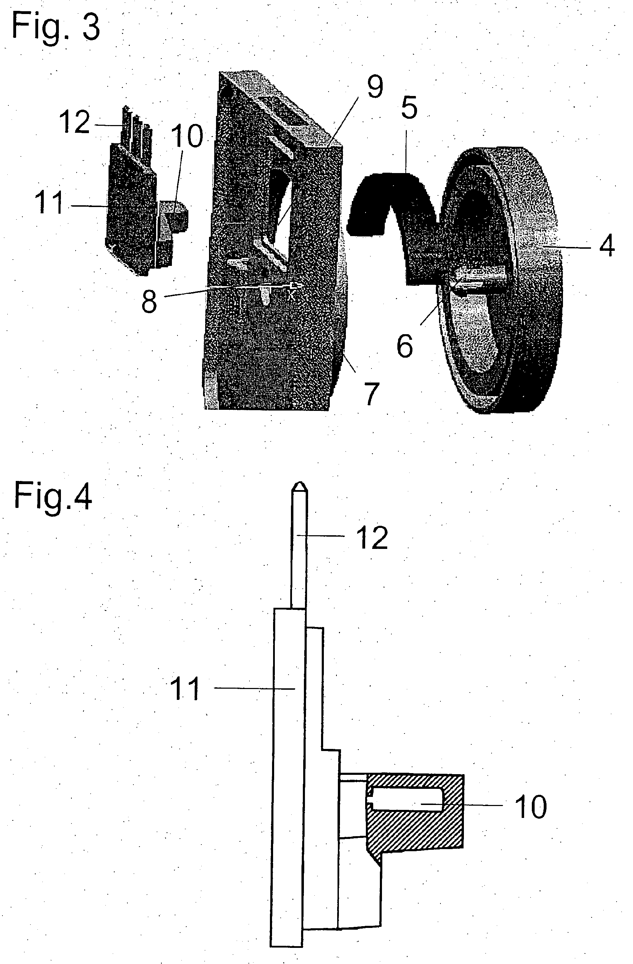

Ein in den Figuren 1-3 dargestellter Füllstandgeber besteht aus einem Schwimmer 1, dessen spezifische Dichte geringer ist als die des im Kraftstoffvorratsbehälter vorhandenen Kraftstoffs, so daß er auf der Oberfläche des Kraftstoffs schwimmt. Der Schwimmer 1 wird durch ein zangenförmiges Endstück 2 eines Hebels 3 mit dem Hebel 3 verbunden. An seinem zweiten Ende weist der Hebel 3 eine im wesentlichen flachzylinderförmige Erweiterung 4 auf, wobei der Hebel radial zu einer Mittelachse der zylinderförmigen Erweiterung 4 weist. In die Erweiterung 4 ist ein halbkreisförmiges Segment eines Ringmagneten 5 eingespritzt. Die Herstellung des Hebels 3 mit seinem zangenförmigen Endstück 2 und seiner flachzylinderförmigen Erweiterung 4 sowie das Einspritzen des Segmentes des Ringmagneten 5 erfolgt in einem Arbeitsschritt im Spritzgußverfahren. Der Hebel 3 weist eine im wesentlichen gitterförmige Struktur auf, die trotz des geringen Volumens des benötigten Materials eine hohe Festigkeit aufweist. Auf der Mittelachse der flachzylinderförmigen Erweiterung 4 befindet sich ein stiftförmiger Fortsatz 6, über den der Hebel in einem Gehäuse 7 drehbar gelagert wird. Dabei wird gleichzeitig zwischen der Bohrung 8 des Gehäuses 7 und dem stiftförmigen Fortsatz 6 eine Clipsverbindung hergestellt, so daß sich der Hebel 3 nicht mehr vom Gehäuse 7 selbsttätig lösen kann. Des weiteren weist das Gehäuse 7 in dem Bereich, in dem die flachzylinderförmige Erweiterung 4 des Hebels 3 im zusammengebauten Zustand angeordnet ist, einen Durchbruch 9 auf, durch den ein Hall-Sensor 10, der auf einer Platine 11 angeordnet ist, hindurchgeschoben wird. Diese Platine 11, die den Hall-Sensor 10 und nicht dargestellte Entstörbauteile aufnimmt, wird von der entgegengesetzten Seite an das Gehäuse geschoben und mit diesem verrastet bzw. verclipst, so daß der Hall-Sensor 10 im zusammengebauten Zustand in den von dieser Seite hohlzylindrischen Teil der flachzylinderförmigen Erweiterung 4 reicht. Hierdurch wird eine optimale Kommunikation zwischen dem Ringmagneten 5 und dem Hall-Sensor 10 sichergestellt. Vor dem Aufstecken der Platine 11 auf das Gehäuse 7 wird die Platine 11 mit den Entstörbauteilen und dem Hall-Sensor 10 mit einem kraftstoffbeständigen Kunststoff umspritzt. Die Position des Hall- Sensors 10 auf der Platine 11 und die Form des entstehenden Bauteils ist in Figur 4 zu erkennen.

Ändert sich nun die Befüllung des Kraftstoffbehälters, so wird der Hebel 3 durch den Schwimmer 1 gedreht. Gleichzeitig dreht sich die flachzylinderförmige Erweiterung 4 mit dem Ringmagneten 5 um den im Gehäuse 7 gelagerten stiftförmigen Fortsatz 6. Dadurch ändert sich das auf den Hall-Sensor 10 einwirkende Magnetfeld des Ringmagneten 5, so daß ein anderes elektrisches Signal über Kontakte 12 von der Platine 11 an die Auswerteeinheit weitergegeben wird. Bei entsprechender Programmierung ist es damit möglich, jedem Drehwinkel des Ringmagneten und daraus entstehendem Ausgangssignal des Hall-Sensors eine Schwimmerstellung und somit einen Füllstand der Flüssigkeit im Behälter zuzuordnen.

Mit der erfindungsgemäßen Ausführungsform liegt eine Konstruktion vor, die durch ihre einfache modulare Bauweise die Bauteilanzahl und somit den Montageaufwand erheblich reduziert und gleichzeitig eine hohe Funktionstüchtigkeit sicherstellt. Durch diese kompakte Bauweise mit wenigen Bauteilen können somit die entstehenden Kosten minimiert werden. Veränderungen bezüglich der Ausführungsform der einzelnen Teile und hier insbesondere die Wahl der die Einzelteile verbindenden Elemente haben keine Auswirkung auf den Schutzbereich der Erfindung.

## Patentansprüche

1. Füllstandgeber für Flüssigkeitsbehälter, insbesondere Kraftstoffvorratsbehälter, mit einem Gehäuse, in dem ein berührungsloser Sensor angeordnet ist, der mit einer Auswerteeinheit verbunden ist und der in Wirkverbindung mit einem Magneten steht, der sich bei Bewegung eines an einem ersten Ende eines Hebels angeordneten Schwimmers relativ zum Sensor bewegt, so daß die Änderung des auf den Sensor wirkenden magnetischen Feldes in ein elektrisches Signal umgeformt wird, so daß von der Auswerteeinheit ein dem Füllstand der Flüssigkeit im Behälter entsprechendes Ausgangssignal gewinnbar ist, **dadurch gekennzeichnet, daß** der Magnet (5) zumindest als Segment eines Ringmagneten (5) ausgeführt ist, der an einem zweiten Ende des Hebels (3) angeordnet und in diesen integriert ist.

2. Berührungsloser Füllstandgeber nach Anspruch 1, **dadurch gekennzeichnet, daß** zumindest das Segment des Ringmagneten (5) mit einem kraftstoffbeständigen Kunststoff des Hebels (3) einspritzbar ist.

3. Berührungsloser Füllstandgeber nach einem der vorhergehenden Ansprüche, **dadurch gekennzeichnet, daß** der Hebelarm (3) drehbar mit dem Gehäuse (7) verbunden und an diesem gelagert, vorzugsweise verclipst oder verrastet, ist.

4. Berührungsloser Füllstandgeber nach einem der vorhergehenden Ansprüche, **dadurch gekennzeichnet, daß** der Sensor (10) frei prorammierbar ist.

5. Berührungsloser Füllstandgeber nach einem der vorhergehenden Ansprüche, **dadurch gekennzeichnet, daß** der Sensor (10) mit Entstörbausteinen auf einer Platine (11) angeordnet ist, diese mit einem kraftstoffbeständigen Kunststoff umspritzt und in das Gehäuse (7) integriert ist.

6. Berührungsloser Füllstandgeber nach einem der vorhergehenden Ansprüche, **dadurch gekennzeichnet, daß** die umspritzte Platine (11) über eine Schnappverbindung an das Gehäuse (7) montierbar und der Sensor (10) dabei durch einen Durchbruch (9) im Gehäuse (7) führbar ist.
